# EUROPEAN PATENT APPLICATION

(11) **EP 0 762 225 A1**
(43) Date of publication of application: **12.03.1997**
(21) Application number: 96202301.6
(22) Date of filing: 19.08.1996
(51) Int. Cl.: G03G 15/00, H04N 1/00

(54) **Apparatus for keeping receiving material in stock in a printing unit**

(30) Priority: 08.09.1995 NL 1001156
(71) Applicant: Océ-Nederland B.V., 5914 CC Venlo (NL)
(72) Inventor: Janssen, Jacobus H. J., 5443 AX Haps (NL); Joosten, Joannes J.W.M., 5991 CD Baarlo (NL); Schonewille, Harm, 5925 BS Venlo (NL); Van Soest, Hendrikus J.J., 5988 KP Helden (NL)
(74) Representative: Hanneman, Henri W.A.M.

(57) **Abstract**

A magazine (2) for keeping receiving material in stock in the space beneath a printing unit (1) formed by three superposable drawers (10, 15, 16, 25), at least one of which is adapted to accommodate a stack of receiving sheets (9) and at least one is adapted to accommodate a roll of receiving material (19, 20, 24, 27, 28).

Two sheet drawers can be provided to replace one roll drawer.

A roll drawer (16, 25) can be adapted to accommodate two adjacent rolls (20, 27; 24, 28), a feed path formed by guide plates (51, 52; 46, 53) extending beneath one of said rolls (20; 24) for the supply of receiving material from the other roll (27, 28) in the associated drawer.

## Description

The invention relates to apparatus for keeping receiving material in stock in a printing unit, comprising a magazine for receiving material situated beneath the printing unit, having at least three separate superposed holders, a first transport path extending vertically at the holders and second transport paths provided with transport rollers and extending from each of said holders to the first transport path, and a third transport path extending from the top end of the first transport path through the printing unit.

An apparatus of this kind is known from US-A-5 237 378, in which receiving material is kept in stock in the form of a number of rolls situated just above one another. From each of these rolls it is possible to feed receiving material via a common transport path to the printing unit situated above the rolls and through the printing unit in a direction opposed to the direction in which the receiving material is drawn from the roll.

In this known apparatus, an input path is provided adapted for manual introduction of a receiving sheet, said input path being situated in the space between the top supply roll and the printing unit and leading into the vertical part of the common first transport path and an input path for originals for printing is provided which extends through the printing unit. If the originals input path is not above a level ideal for operation by a standing operator, the input path situated beneath the printing unit for the manual inputting of receiving sheets restricts the space available beneath the printing unit for the storage of receiving material.

The object of the invention is an apparatus of the kind referred to in the preamble in which sufficient space is created for stocking a variety of different receiving materials, which receiving materials can be selectively fed automatically to the printing unit.

Particularly in printers of the type in which the information printed is available in electronic form and the operation of the printer is carried out elsewhere, e.g. at a scanner for the originals for printing, such scanner being physically separate from the printer, sufficient space is important to ensure that there is a high probability of the receiving material required for a specific printing job being in stock and directly available, in order thus to ensure that a number of different printing jobs can be performed automatically and consecutively, even with different types and/or formats of receiving material, without it being necessary for an operator to intervene to change receiving material in the magazine.
To this end, according to the invention, at least one of said holders is a holder for a stack of receiving sheets and at least one of the other holders is a holder for a roll of receiving material. Consequently, receiving material in a wide variety and/or sizes can be provided for undisturbed performance of a relatively large number of printing jobs without receiving material having to be replaced or changed in the holders.

Preferably, the input path for manual introduction of a receiving sheet is situated on that side of the first transport path which is remote from the second transport path and leads directly into the third transport path. Consequently, if the apparatus according to the invention is provided with an originals input path situated at the ideal working height for an operator in front of the printing unit, the input path for manually inputting a receiving sheet can be situated a short distance below this ideal working height and if the apparatus according to the invention has an originals input path at a scanner physically separate from the printer, as is possible with an electronic printer, the input path for manually inputting a receiving sheet can be situated at an ideal working height for an operator in front of the printing unit, while in both cases the height of the apparatus can be utilised in optimal manner to store receiving material beneath the printing unit.

In one attractive embodiment of an apparatus according to the invention, at least one of the holders for a roll of receiving material can carry at least one other roll of receiving material on that side of said roll which is remote from the first transport path, the axis of the second roll being situated at the same height as the axis of the roll of receiving material situated next to the same, and a fourth transport path for receiving material unwound from said other roll extends in a flat plane at the bottom of the adjacent rolls of receiving material. Consequently, rolls of receiving material can be situated just above one another and alongside one another, thus permitting optimal utilisation of the space beneath the printing unit for storage and for feeding receiving material to the printing unit.

In another attractive embodiment of an apparatus according to the invention each holder is formed by a drawer movable between a position in which the drawer is situated completely beneath the printing unit and a position in which the drawer extends outside the printing unit as viewed horizontally, preferably on that side of the apparatus where a receiving sheet can be fed manually in the printing unit.
The effect of operating the drawer, which acts as a holder, for insertion and removal of receiving material on the same side as manual inputting, is that all the operating functions for feeding receiving material can be situated on one side of the printing unit with the receiving material magazine therebeneath, while functional units for outputting, delivering, and further processing receiving material printed in the printing unit, can be situated on the side remote from the operating side.
If the height of a drawer adapted to accommodate one or more rolls of receiving material is a multiple of the height of a drawer adapted to accommodate a stack of sheets, an integral number of sheet drawers can be accommodated at the location of one roll drawer, thus allowing optimal utilisation of the available space, even if more than one sheet holder is provided.

The invention is explained hereinafter with reference to accompanying drawings wherein:
Figs. 1 to 6 illustrate a number of embodiments of an apparatus according to the invention, each with a different number of holders for stacks of receiving sheets and/or rolls of receiving material.
Fig. 7 is a practical embodiment of an apparatus according to the invention with stack and roll holders in the form of drawers.
Fig. 8 shows a loose roll holder in the form of a drawer.
Fig. 9 shows the apparatus according to Fig. 7 with the operator standing next to the same before a drawer is opened.
Fig. 10 shows the apparatus of Fig. 9 with the drawer open.
Fig. 11 diagrammatically illustrates a drive for selective supply of receiving material from one of the rolls from a drawer and
Fig. 12 is a cross-section on the line XII-XII in Fig. 11.

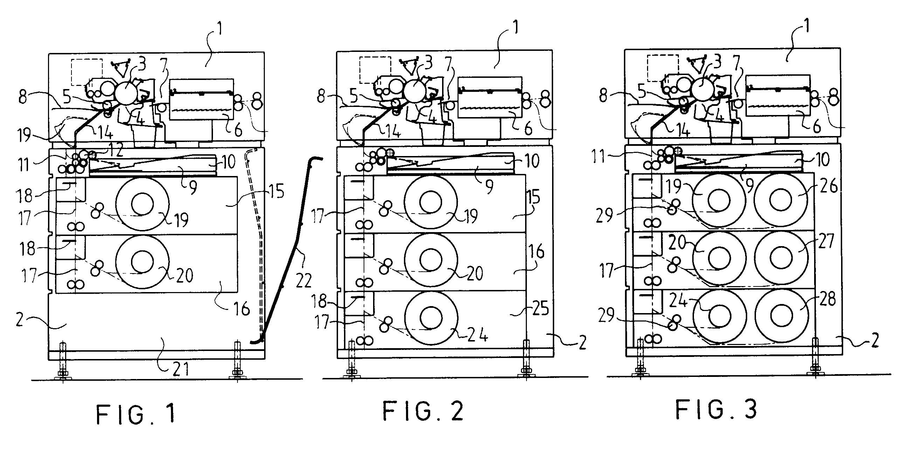

The apparatus illustrated in Figs. 1 to 6 comprises a printing unit 1 with a magazine 2 therebeneath for receiving material for printing in the printing unit 1. The latter comprises a photoconductive drum 3 on which a toner image can be formed, the toner image being transferred, in an image transfer station 4, to a receiving sheet brought into contact with the photoconductive drum 3 by feed rollers 5 and taken through the transport path 7. The toner transferred to the receiving sheet is then fixed on the sheet in a fixing device 6 by means of radiant heat.

The printing unit 1 is adapted to print information available in electronic form, such information originating from a scanner for originals for printing, such scanner being separate from the printing unit. Since only loose receiving sheets have to be fed into the printing unit 1 manually via the manual input path 8, and not originals in sheet form, the manual input path 8 can be disposed at an ideal working height for an operator of average height, e.g. a height of 950 mm.

If the printing unit is in the form of a copying machine in which originals are scanned, the input path for the originals would be disposed at said ideal working height, so that the manual input path for receiving sheets would of necessity be situated therebeneath, e.g. at a working height of 800 mm, at the expense of the magazine space available beneath the printing unit 1.

The magazine 2 shown in Fig. 1 is adapted to receive a stack of receiving sheets 9 in a sheet holder 10 situated directly beneath the printing unit 1 in the magazine 2.
The sheet holder 10 is provided with a transport path 11 extending vertically through the holder 10, sheets removed from the stack 9 by rollers 12 being taken through said transport path 11. The latter leads to a transport path 14 which extends in the printing unit 1 and which in turn leads into the manual input path 8 just in front of the input rollers 5. The sheet holder 10 is in the form of a drawer which, on the side of the magazine 2 where the transport path 11 is situated, can be pulled out for the insertion or removal of receiving sheets. Directly beneath the sheet holder 10 the magazine 2 contains two identical roll holders 15 and 16 which are also constructed as sliding drawers. Each of these drawers 15, 16 can contain a roll of receiving material and is provided with a transport path 17 extending vertically through the drawer and a cutting device 18 for cutting a sheet of receiving material unwound from the roll in the drawer in question. To be able to cut off a sheet from a stationary web without it being necessary to interrupt the sheet transport through the image transfer station 4, a loop 19 is formed in the web in transport path 14 prior to the cutting operation, and during the cutting operation said loop is pulled away by the sheet moving continuously through the image transfer station 4. Cutting can also be carried out with a cutting device which cuts through an advancing web of material, in which case loop formation is superfluous.

If the distance between the bottom of the printing unit 1 and the input path 8 is 150 mm, which may be necessary to enable loop formation, and if the distance of the bottom of the magazine from the floor is 100 mm, then the available magazine height remaining is 950 - 150 - 100 = 700 mm, which is sufficient for three roll holders each 200 mm high and a sheet holder of 100 mm. A sheet holder of this kind is suitable to receive a stack up to a conventional thickness of 35 mm, which is sufficient for approximately 20 to about 300 sheets, depending on sheet thickness. A roll holder of a height of 200 mm is suitable to receive a roll of receiving material having a roll diameter of up to 185 mm. The distance between the rolls is then 15 mm, which is sufficient to provide a flat transport path between the rolls as will be described hereinafter.

The roll drawers 15 and 16 shown in Fig. 1 are of identical construction and each adapted to accommodate one roll of receiving material. For the insertion and removal of a roll of receiving material 19, 20 respectively, the drawers 15 and 16 slide out at the front - the side where the manual input path 8 is situated - so that the roll can be placed in the drawer from above. The sheet holder 10 accommodated at the top of the magazine 2 is suitable particularly for accommodating receiving material normally not available in roll form, e.g. to accommodate A4 sheets to be fed longitudinally through the printing unit 1, it not being possible to feed such sheets transversely through the printing unit in the absence of transport means at sufficiently short intervals.

In the embodiment of the magazine 2 shown in Fig. 1, the space beneath the two roll drawers 15 and 16 is left open to serve as a receiving space 21 for copies printed in the printing unit 1. To this end, the back wall 22 of the magazine 2 is movable between a broken-line closed position and a solid-line open position, in which latter position the back wall 22 acts as a guide plate for guiding a copy sheet from the fixing device 6 to the receiving space 21, where the copy sheet can be taken out of the magazine 2 from the front.

The embodiment of the magazine 2 shown in Fig. 2 differs from that shown in Fig. 1 in that the open receiving space 21 shown in Fig. 1 is used in Fig. 2 to accommodate a third roll holder 25 which, like the other roll holders, can accommodate one roll of receiving material 24.

In the embodiment of the magazine 2 shown in Fig. 3, each of the three insertable roll holders is adapted to accommodate a second supply roll 26, 27, or 28, so that in total there can be six supply rolls in the space beneath the printing unit 1. By means of each of these rolls 19, 20, 24, 26, 27, 28 it is possible to keep in reserve a different type of receiving material, e.g. a different type of material and/or of a different width.

From each roll holder 15, 16 and 25 it is possible automatically to feed receiving material from one of the two accommodated rolls, 19 or 26, 20 or 27 and 24 or 28 respectively, by inserting the unwound end of one of said rolls, e.g. 26, manually into the nip between a pair of transport rolls 29 common to both supply rolls, e.g. 19 or 26, possibly after the loose end of the other roll, e.g. 16, has been withdrawn from said nip.

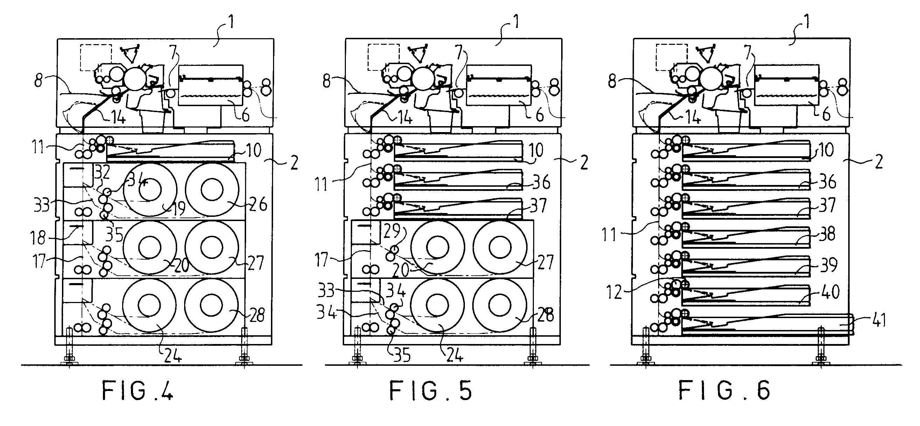

Fig. 4 shows a variant of the embodiment illustrated in Fig. 3, in which each of the three roll drawers 15, 16 and 25 is provided with separate feed paths 32 and 33 in the drawers, said paths 32 and 33 extending from one of the rolls to the common transport path 17 extending vertically through the associated drawer. Each of the feed paths 32 and 33 is provided with an independently drivable pair of transport rollers 34, 35 respectively. Thus from each roll holder 15, 16 and 25 it is possible automatically to supply receiving material from each of the two supply rolls present and cut a sheet therefrom, while in each case the leading edge of the inactive supply roll is withdrawn from the cutting station in the common feed path 17 up to the relevant feed path 32, 33 respectively, in order not to obstruct the feeding of receiving material from the other supply roll in the same drawer or from a lower drawer.

Fig. 5 relates to an embodiment of a magazine 2 in which the top roll holder 15 of Fig. 4 is replaced by two sheet holders 36, 37 which, as described above, each have a height equal to half the height of a roll holder. Of the remaining two roll holders the top one is of the type shown in Fig. 3 and the bottom one is of the type shown in Fig. 4.

Finally, the embodiment shown in Fig. 6 relates to a magazine having only holders for stacks of sheets, namely two sheet trays 38 and 39 respectively at the location of the middle roll holder 16 and two sheet trays 40 and 41 at the location of the bottom roll holder 25.

The top sheet drawer 10 and the drawers 36 to 40 are adapted to accommodate a stack of sheets of A2 format maximum, with the short side of 420 mm parallel to the feed direction, and the bottom sheet tray drawer 41 is adapted to receive a stack of sheets of A1 format maximum, with the short side of 600 mm also parallel to the feed direction.

To arrange the magazine 2 in one of the sub divisions shown in Figs. 1 to 6, or a variant thereof, the side walls of the magazine as considered vertically are provided at regular intervals of 100 mm with fixing means for the installation of rectilinear guide rails (not shown) for the fitting and sliding in and out of 200 mm high roll drawers or 100 mm high sheet tray drawers, the roll drawers being of the type adapted to accommodate one roll or the type to accommodate two rolls, with or without automatic change-over means.

The facilities in the magazine 2 for driving the separation rollers 12 in the sheet tray drawers 10 and 36 to 41 and pairs of transport rollers 29, 34 and 35 in the roll drawers, are adapted to any possible division of the magazine 2 based on the 100 mm installation module for a sheet tray drawer and/or the double installation module of 200 mm for a roll drawer. For example, the top roll drawer can occupy the location of the two sheet tray drawers 10 and 36. It may be advisable as far as possible to accommodate the required types of receiving material in the magazine 2 in roll form since (partly used) rolls of receiving material are more difficult to handle outside the magazine than (partly used) stacks of receiving sheets. Rolls situated in a cabinet or on a shelf may roll away and/or roll off, while they are difficult to stack, in contrast with packets of receiving sheets, which are easy to form into a stable stack and hence require less storage space outside the magazine 2 than do rolls.

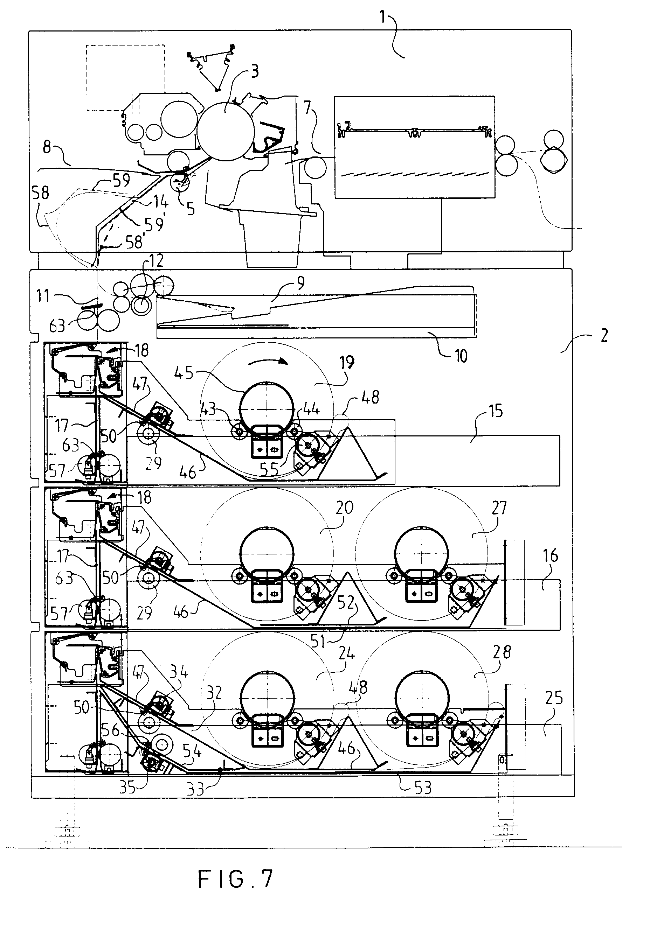

Fig. 7 shows a practical embodiment of an apparatus according to the invention of the type comprising one sheet tray drawer 10, one roll tray drawer 15 to accommodate one roll of the type shown in Fig. 2, one roll tray drawer 16 to accommodate two rolls of the type shown in Fig. 3, and a roll tray drawer 25 to accommodate two rolls of the type shown in Fig. 4. The sheet tray drawer 10 accommodates a number of rollers 12 which in manner known per se separate one copy sheet from the stack 9 pressed against one of said rollers and feed it to the common vertical transport path 11 and from there through the printing unit via transport paths 14 and 7. The printer control system includes control means for feeding a copy sheet from the sheet tray drawer 10 whenever the copy sheet format and orientation of the stack in the drawer 10 corresponds to the required format on which a print is to be made.

Of the three roll tray drawers shown in Fig. 7, the top drawer system is the simplest. It comprises two support rollers 43 and 44, on which the core 45 of a roll of receiving material 19 can rest. The bottom of this drawer is formed by a guide plate 46 which extends just beneath a roll of maximum size, centrally beneath the roll horizontally and upwards at an angle between the roll 19 and the common transport path 17.

Above part of the obliquely upwardly extending part of the guide plate 46 and at a short distance therefrom a guide plate 47 is provided which together with the guide plate 46 forms a closed transport path as far as the common transport path 17. A pair of transport rollers 29 and a detector 50 for a web of material present therein are disposed in said closed part of the transport path. A flexible flap 48 is fixed by one side to the drawer while its free end rests on the guide plate 46. After a roll of receiving material 19 has been placed on the support rollers 43 and 44 and the flap 48, it is turned manually in the direction of the arrow, the free end of the web of material sliding over the flap 48 in the closed transport path between guide plates 46 and 47. When the detector 50 is actuated by the leading edge, the transport rollers 29 are temporarily activated in order to pull the web of material from the roll and hold it taut. Insertion of supply rolls in the other two drawers is effected correspondingly. In the middle roll drawer 16, which can accommodate two supply rolls 20 and 27 alongside to one another, the guide plate 51 forming the bottom of the drawer extends to beneath the supply roll 27 and a guide plate 52 is disposed between guide plate 51 and the supply roll 20 and forms a closed transport path beneath roll 20 for a web of material unwound from roll 27. For automatic supply from roll 27 roll 20 can be manually turned in the anticlockwise direction in order to withdraw the loose end to above the guide plate 52, whereafter roll 26 is turned manually in the direction of the arrow in order to push the loose end via the closed transport path between guide plates 51 and 52 and then between guide plates 46 and 47 as far as the pair of transport rollers 29.

In the bottom roll drawer 25, each of the two rolls 24 and 28 has a separate transport path as far as the common vertical transport path 17. The transport path for roll 24 is constructed from two guide plates 46 and 47 as in the top drawer and the transport path for roll 28 is constructed from a bottom guide plate 53 extending beneath the two rolls 24 and 28 and obliquely upwards as far as the common transport path 17 and a top guide plate partly formed by the guide plate 45 and partly by a guide plate 54, the latter part of the path forming an obliquely upwardly extending closed guide path in which a pair of transport rollers 35 and a detector 56 are disposed as in the transport path situated in parallel relationship thereabove. A cutting device 18 is disposed in each roll drawer in the common transport path 17 to cut a sheet from the supply roll accommodated in said drawer, and the cutting device 18 may be of the type described in Netherlands patent application 9500398.

Moreover, in each drawer, apart from the bottom one, a pair of transport rollers 57 is disposed in the common vertical transport path 17 to transport in said path a sheet originating from a drawer therebeneath. To enable a web of material to be cut by the cutting device 18 when the web is stationary, the printing unit comprises two forked guide plates 58 and 59 which can be pressed by springs (not shown) into a loop-forming position. After the leading edge of the web of material has been engaged by transport rollers 65 past said loop, the resulting web tension pulls the guide plates 58 and 59 down into positions 58' and 59'. Cutting takes place while the loop is being pulled away. To cut a sheet to the required length, the cutting device in the associated drawer is activated after the web has advanced a specific distance past a detector 63 accommodated in the next highest drawer, the control system allowing for the fixed distance between the activated detector and the cutting device 18 situated just in front of the same.

A pulse disc 55 is coupled to one of the freely rotatable support rollers 44 for a roll in order to derive the speed of rotation of the supply roll from the number of pulses delivered per unit of time, the pulse frequency becoming zero when the roll is finished.

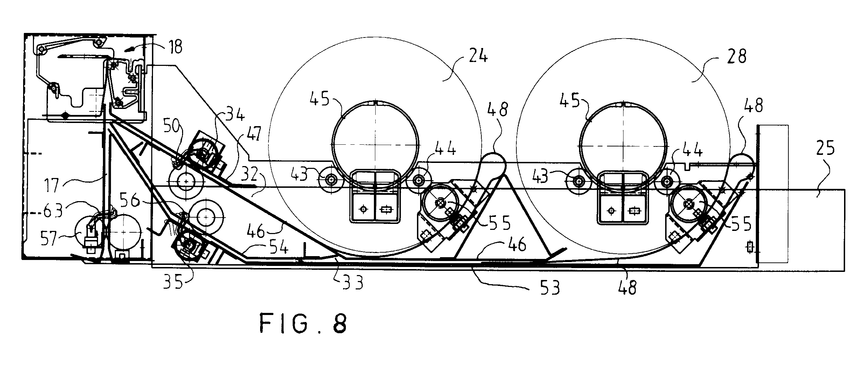

Fig. 8 shows a drawer, with hands drawn in bringing a supply roll into its initial operative position.

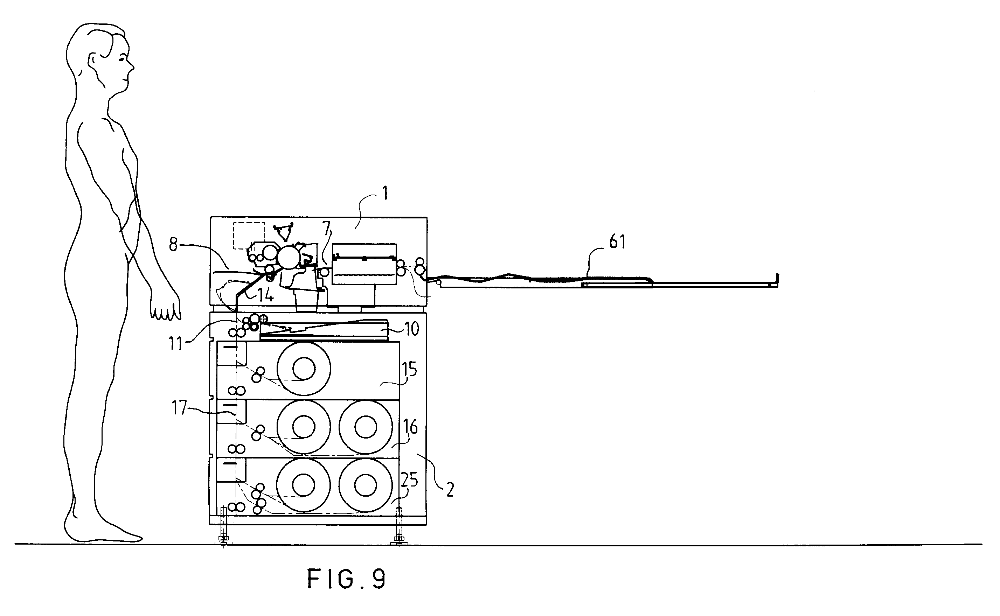

Fig. 9 shows the apparatus of Fig. 7 with an operator standing in front of the apparatus with the drawers closed, it being possible for the operator readily to use his hands to carry out operations such as lifting and lowering a supply roll or a packet of paper for insertion into the drawers. The finished copies are deposited on a flat delivery table 61 by the apparatus shown in Fig. 9.

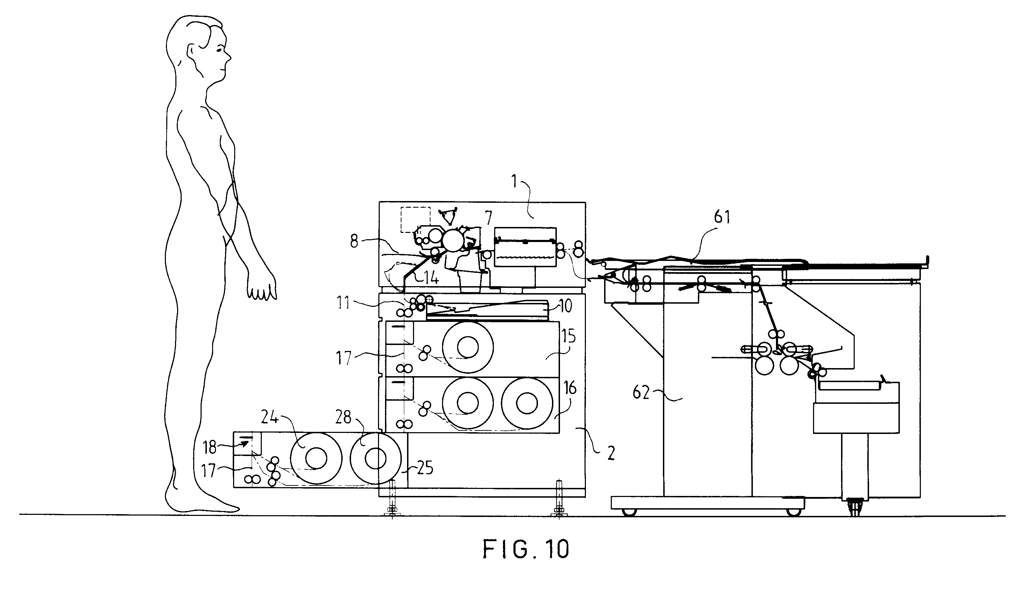

Fig. 10 shows the apparatus of Fig. 7 with a folding device 62 beneath the delivery table 61 for the consecutive longitudinal and transverse zig-zag folding of large-format copy sheets in manner known per se. Fig. 10 also shows the bottom drawer 25 in the open position.

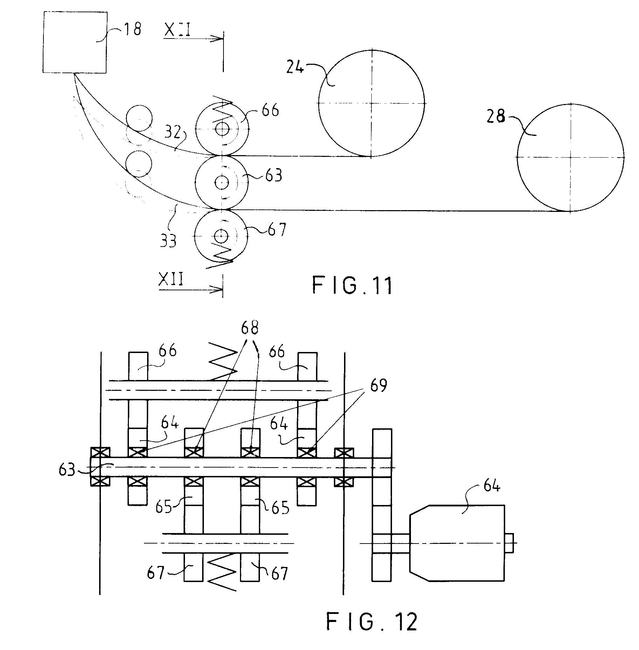

Figs. 11 and 12 show a variant of the pairs of rollers 34 and 35 shown in Fig. 7 for the bottom drawer. In this variant, the transport rollers situated between the parallel transport paths 32 and 33 are replaced by one common transport roller 63 in disc form, which can be driven in two directions by a motor 59. Two biasing rollers 66 and 67 co-operate with the discs 64 and 65 of transport roller 63 respectively and form nips in the parallel transport paths 32, 33. Unidirectional couplings 68 and 69 between the motor shaft and the discs 64 and 65 operating in opposite directions prevent said discs from forming with biasing rollers 66 and 67 co-operating therewith a transport nip operating in a direction opposed to the feed direction. The selective drive of the transport nips in webs 32 and 33 can also be achieved by the gearwheel on the shaft of motor 59 co-operating with a gearwheel on each of the shafts of the biasing rollers 66 and 67, a unidirectional bearing forming the coupling between each of said gearwheels and the biasing roller shaft. To withdraw receiving material of the inactive roll from the common transport path 17 through cutting device 18, a mechanism known from Research Disclosure of October 1981, pages 389 to 390, can be used on each of the biasing rollers 66 and 67. The drive shown in Figs. 11 and 12 enables a compact construction of the pairs of transport rollers 49 and 55 shown in Fig. 8.

## Claims

1. Apparatus for keeping receiving material in stock in a printing unit (1), comprising a magazine (2) for receiving material situated beneath the printing unit (1), having at least three separate superposed holders (10; 15, 16, 25; 36 - 41), a first transport path (17) extending vertically at the holders (10; 15, 25; 36 - 41) and second transport paths (32) provided with transport rollers (34) and extending from each of said holders to the first transport path (17), and a third transport path (7) extending from the top end of the first transport path (17) through the printing unit (1), characterised in that at least one of said holders is a holder (10; 36 - 41) for a stack of receiving sheets (9) and at least one of the other holders is a holder (15, 16, 25) for a roll of receiving material (19, 20, 24, 26, 27, 28).

2. Apparatus according to claim 1, characterised in that an input path (8) for manual introduction of a receiving sheet is situated on that side of the first transport path (17) which is remote from the second transport path (32, 33) and leads directly into the third transport path (7).

3. Apparatus according to claim 1 or 2, characterised in that at least one of the holders (15, 16, 25) for a roll of receiving material (19, 20, 24) can carry at least one other roll of receiving material (27, 28) on that side of said roll which is remote from the first transport path (17), the axis of the second roll (27, 28) being situated at the same height as the axis of the roll of receiving material (19, 20, 24) situated next to the same, and in that a fourth transport path (33) for receiving material unwound from said other roll (26, 27, 28) extends in a flat plane at the bottom of the adjacent rolls of receiving material (19, 26; 20, 27; 24, 28).

4. Apparatus according to claim 3, characterised in that the fourth transport path (33) is formed by a bottom guide plate (53) extending beneath the adjacent rolls and a top guide plate (46) extending only below the roll (19, 20, 24) nearest the first transport path.

5. Apparatus according to claim 4, characterised in that the fourth transport path (33) leads into the second transport path (32) in front of a transport nip received therein and formed by transport rollers (34).

6. Apparatus according to claim 4, characterised in that the said fourth transport path (33) leads directly into the first transport path (17) and is provided with a transport nip formed by transport rollers (35) in the part (33) situated between the roll of receiving material (24) nearest the common transport path (17), on the one hand, and the common transport path (17), on the other hand.

7. Apparatus according to claim 6, characterised in that the transport rollers (34, 35) situated between the fourth transport path (3.3) and the second transport path (32) are formed by discs (64 and 65 respectively) fixed on a common shaft (63) and co-operating respectively with biasing rollers (66, 67) for forming transport nips in the fourth and second transport paths, a drive motor (64) being reversible in its direction of rotation and selectively driving the transport nips via unidirectional couplings operating in opposite directions.

8. Apparatus according to any one of the preceding claims, characterised in that each holder (10; 15, 16, 25; 36 - 41) is formed by a drawer movable between a position in which the drawer is situated completely beneath the printing unit (1) and a position in which the drawer extends outside the printing unit (1) as viewed horizontally.

9. Apparatus according to claim 8, characterised in that the drawer can project on the side of the apparatus where an input path (8) is located for manually inputting receiving material in the printing unit (1).

10. Apparatus according to claim 9, characterised in that each part of the common transport path situated in a drawer containing a roll of receiving material contains a cutting device (18) for cutting a sheet off receiving material unwound from said roll.

11. Apparatus according to claim 8, characterised in that the height of a drawer (15; 16; 25) for receiving a roll (19, 20, 24, 26, 27, 28) of receiving material is a multiple of the height of a drawer (10; 36 - 41) for accommodation of a stack of sheets (9).

12. Apparatus according to claim 11, characterised in that said multiple amounts to two.
